Europäisches Patentamt

(19) European Patent Office

Office européen des brevets

(11) Veröffentlichungsnummer: **0 008 012**
A1

# (12) EUROPÄISCHE PATENTANMELDUNG

(21) Anmeldenummer: 79102424.3

(22) Anmeldetag: 13.07.79

(51) Int. Cl.³: **B 29 C 1/12**, B 29 H 17/02

(30) Priorität: 25.07.78 DE 2832566

(43) Veröffentlichungstag der Anmeldung: 20.02.80
Patentblatt 80/4

(84) Benannte Vertragsstaaten: BE DE FR GB IT

(71) Anmelder: BAYER Aktiengesellschaft, Zentralbereich
Patente, Marken und Lizenzen Bayerwerk, D-5090
Leverkusen 1 (DE)

(72) Erfinder: Boden, Heinrich, Sperberweg 14, D-5090
Leverkusen 3 (DE)
Erfinder: Just, Gerhard, Finkenweg 2, D-5653
Leichlingen 1 (DE)
Erfinder: Knipp, Ulrich, Dr., Haberlandstrasse 3,
D-5060 Bergisch-Gladbach 2 (DE)

(54) **Verfahren zur Herstellung von Hohlkörpern.**

(57) Bei der Herstellung von Hohlkörpern aus gießfähigen Kunststoffen wird als Kern (7) in die Form (8) ein elastischer, mit rieselfähigen Partikeln gefüllter Balg eingesetzt. Der Kern wird entweder in der Form oder vorher in einer separaten Kernform durch Schleudern oder Evakuieren verfestigt. Werden die Partikeln aus dem Balg entfernt, ist ein problemloses Herausziehen des Balges aus dem Hohlkörper, auch wenn Hinterschneidungen vorhanden sind, möglich. Bevorzugt dient dieses Verfahren zur Herstellung von Luftreifen.

79102424.3

0008012

BAYER AKTIENGESELLSCHAFT     5090 Leverkusen, Bayerwerk
Zentralbereich                HÖ/bc/RBG
Patente, Marken und Lizenzen


Verfahren zur Herstellung von Hohlkörpern

Die Erfindung betrifft ein Verfahren zur Herstellung von Hohlkörpern. Ein typisches Beispiel für einen Hohlkörper aus Kunststoff, vorzugsweise einem Elastomeren, mit Hinterschneidungen ist ein Fahrzeugreifen; andere Beispiele für hinterschnittene Formteile sind Schiffskörper, Bojen, Gummischuhe, Spielsachen u.a.

Die Herstellung von Hohlkörpern ist erschwert, wenn Hinterschneidungen auftreten, weil die Entfernung des Kerns mit Schwierigkeiten verbunden ist. Ein metallischer Formkern muß zur Kernentformung geteilt werden können. Ein solcher Kern ist aufwendig. Man hat auch sogenannte Verlustkerne eingesetzt; sie bestehen meist aus Schaumstoff und werden nach der Formgebung zerteilt. Schaumstoff hält oft den auftretenden hohen Preßdrücken nicht stand. Bekannt sind auch aus formänderbarem, elastischem Material bestehende Hohlkörper, die mit niedrig schmelzenden Substanzen gefüllt sind. Auch diese Verfahren sind sehr aufwendig.

Le A 18 979

Aufgabe der Erfindung ist es, ein rationelles Verfahren zur Herstellung von Hohlkörpern zu entwickeln. Diese Aufgabe wird dadurch gelöst, daß zunächst ein als Formkern dienender elastischer Balg mit rieselfähigen Partikeln gefüllt, geformt und in der Gießform fixiert wird und bei der Kernentformung die Partikel aus dem Balg entfernt werden und der Balg herausgezogen wird. Der Kern wird vorzugsweise in einer eigenen Form vorgefertigt.

Die Größe und Form des Kernes sind in weiten Grenzen variierbar. Der Kern hat geringes Gewicht und ist verhältnismäßig billig, trotzdem ist er wiederholt verwendbar. Er hat auch bei hohen Preßdrücken eine gute Konturstabilität.

Der Balg besteht aus einem elastischen Werkstoff, beispielsweise aus Kautschuk, PVC, Polyurethan. Häufig ist der Balg auch mit Glas-, Polyäthylen-, Polyamid- oder Aramidfasern oder ähnlichem verstärkt. In den Balg werden rieselfähige Partikel gefüllt, vorzugsweise Kugeln aus Blähglas oder Blähton oder geschäumte Kugeln aus Kunststoffen, wie beispielsweise Polystyrol oder Polycarbonat oder Gemische davon mit einem Durchmesser von 0,1 bis 20 mm, besonders bevorzugt mit einem Durchmesser zwischen 3 und 8 mm.

Zur Verfestigung des Kernes sind zwei Verfahren besonders bevorzugt. Es kann zur Formstabilität des Kernes ausreichen, wenn der Balg beim Befüllen geschleudert wird. Nach einer anderen Methode wird der gefüllte Balg evakuiert. Der Druck wird auf 0,5 bis 0,9 bar absolut erniedrigt. Dabei wird eine ausreichende Verfestigung der rieselförmigen Partikel in den Balg erreicht.

Le A 18 979

Eine weitere Verbesserung besteht darin, daß der Balg vor dem Füllen mit rieselfähigen Partikeln mit Druck beaufschlagt wird und nach dem Einfüllen der rieselfähigen Partikel durch Entspannen des Druckes und gegebenenfalls zusätzliches Evakuieren verfestigt wird.

Geeignete Bälge, die von sich aus schon zur richtigen Konturbildung des Kernes ausreichen, lassen sich beispielsweise in einem aus dem Epoxidharz hergestellten Formwerkzeug mit der eingeprägten Außenkontur des gewünschten Balges herstellen. Man drückt beispielsweise in eine noch klebrige Polyurethangießharzschicht einander überlappende Gewebematten, auf die nochmals eine Polyurethanhaut aufgetragen wird. Nach dem Aushärten ist der Balg verwendungsfähig.

Bei einem hinreichend formstabilen Balg kann die Füllung mit rieselförmigen Partikeln und die Verfestigung der Füllung bereits in der Gießform zur Herstellung des Hohlkörpers erfolgen. Bei Kernen, die sehr genau sein müssen, und überall dort, wo Verstärkungselemente in den Hohlkörper eingearbeitet werden müssen, ist es erforderlich, den Balg in einer separaten Form zu füllen und zu verfestigen. Die Verfestigung des Kernes kann durch Schleudern und/oder durch Evakuieren erfolgen.

Soll in den herzustellenden Hohlkörper eine Armierung eingebracht werden, so bieten sich mit dem erfindungs-

Le A 18 979

gemäßen Verfahren mehrere Möglichkeiten. Neben dem bloßen Einlegen oder Einfüllen der Armierungselemente in den Hohlraum zwischen dem Kern und der Form besteht vor allem auch die Möglichkeit des gezielten Einbaus, weil die Armierung an dem erfindungsgemäßen Kern in der gewünschten Weise vorher fixiert werden kann. Als Armierungselemente kommen besonders organische und anorganische Fäden, Drähte, Gewebe, Gewirke, Vliese und Kunststoff-Formlinge sowie auch Kombinationen untereinander in Frage. Als Material wird bevorzugt Kunststoff, Glas, Stahl, Zellulose, Kohlenstoff in Verbindung mit bekannten Haftvermittlern und/oder Schlichten eingesetzt. Es können in gleicher Weise auch Erhöhungen und Vertiefungen am Formteil vorgeplant werden, indem voluminöse Vliese oder offenporige Schaumstoffe am Kern fixiert werden.

Ein besonders typisches Anwendungsgebiet des erfindungsgemäßen Verfahrens ist die Reifenherstellung. Bei einem in einem Stück gefertigten Reifen ist die Kernentformung wegen der Hinterschneidungen ein arbeitsaufwendiger Vorgang. Es ist wiederholt vorgeschlagen worden, den Reifen aus Teilen, beispielsweise aus zwei Reifenhälften, aufzubauen, weil bei der Herstellung der Reifenhälften keine Hinterschneidungen auftreten und der Kern problemlos entformt werden kann. Jedoch können sich bei dem Zusammenfügen der Reifenteile erhebliche Probleme ergeben. Dagegen kann nach dem erfindungsgemäßen Verfahren ein einteiliger, gegebenenfalls auch verstärkter Reifen in einem Arbeitsgang hergestellt werden, wobei die Fertigung wegen der einfachen Kernentformung rationell ist.

Le A 18 979

- 5 -

Das erfindungsgemäße Verfahren ist beispielhaft bei der
Reifenherstellung beschrieben und in der Zeichnung dargestellt. Es zeigen die Figuren jeweils Querschnitte durch
den oberen Teil der Form bzw. des Reifens.

Figur 1    Kernform mit eingelegtem Balg;
Figur 2    gefüllte Kernform;
Figur 3    Reifenform mit eingelegtem Kern;
Figur 4    Reifen mit entleertem Balg.

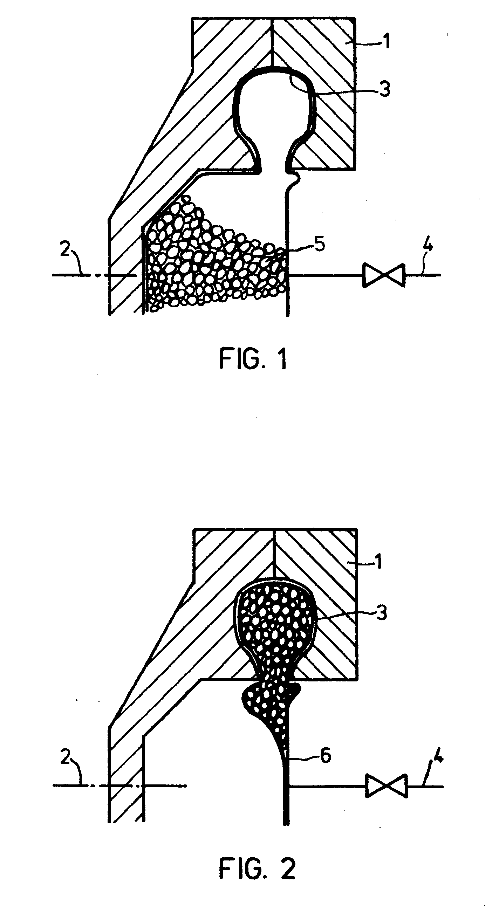

Figur 1 zeigt eine Form 1 zur Herstellung und Verfestigung des Kerns einer Reifenform, wobei der Hohlraum der
Form auf die gewünschte Kontur des Kernes abgestimmt ist.
Die Schleuderform 1 ist um die Achse 2 drehbar. In die
Form 1 ist ein Balg 3 aus elastischem Material eingelegt;
es handelt sich hier um eine faserverstärkte Polyäthylenfolie. Die Anfertigung des Balgs gehört zum Stand der
Technik. Der Balg 3 ist über eine absperrbare Leitung 4
aufblasbar und evakuierbar; er ist mit Blähgranulat 5
teilweise gefüllt. Es kann zweckmäßig sein, im Balg 3
einen Überdruck von beispielsweise 1 bar zu erzeugen,
damit sich der Balg an die Kernform besser anschmiegt.
Durch Schleudern der Form 1 um die Achse 2 werden die
rieselfähigen Partikel gleichmäßig im Umfangsbereich des
Balges 3 verteilt.

In Figur 2 ist über die Leitung 4 die Luft abgesaugt worden. Der Enddruck liegt im Bereich 0,9 bis 0,5 bar. Der
Balg 3 legt sich im inneren Bereich 6 des Balges, wo er
nicht gefüllt ist, aneinander. Die Verfestigung der Par-

**Le A 18 979**

tikel im Balg beruht ja auf zwei Effekten: Durch die Rotation der Form und durch den Unterdruck. Ein Unterdruck von ca. 0,5 bar reicht auch alleine zur Verfestigung aus. Die durch die Form 1 festgelegte Kontur des Balges wird durch die Entnahme des Formkerns aus der teilbaren Form 1 nicht mehr verändert.

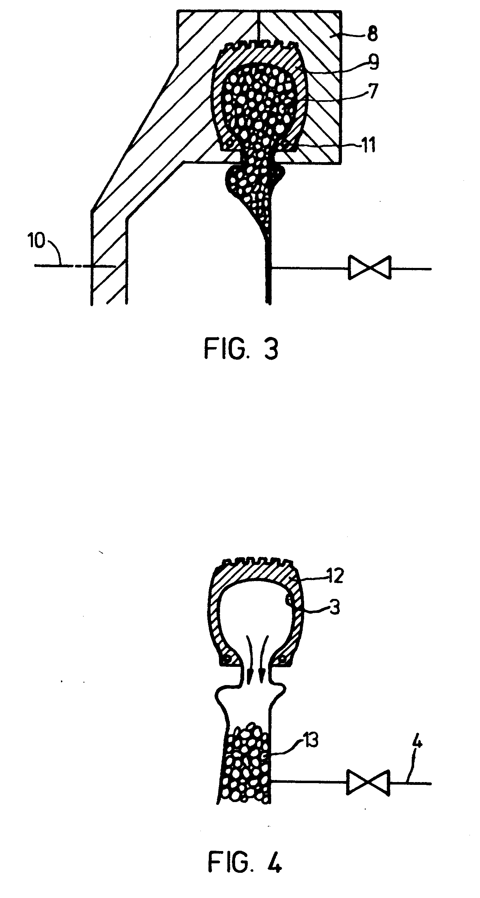

In Figur 3 ist ein nach Figur 2 hergestellter Kern 7 in eine ähnliche Rotationsreifenform 8 eingelegt. Der verbleibende Raum zwischen der Form 8 und dem Kern 7 wird mit einem Mehrkomponentenreaktionsgemisch 9, beispielsweise auf Polyurethanbasis, gefüllt und um die Achse 10 geschleudert. Die erforderlichen Armierungseinlagen werden bei dem Zusammenbau der Form eingelegt; in dieser Figur sind nur Wulstdrähte 11 dargestellt.

Nach der Verfestigung kann der Reifen 12 der Form 8 entnommen werden. In Figur 4 ist dargestellt, wie bei Luftzutritt über die Leitung 4 die sich jetzt nicht mehr aufeinander abstützenden Partikel 13 wieder rieselfähig geworden sind. Der Balg 3 kann mechanisch leicht aus dem Reifen herausgezogen werden. Das Herauslösen des Balges wird, falls erforderlich, durch erneutes Evakuieren über 4 erleichtert.

Der Balg ist wieder verwendbar.

**Le A 18 979**

Patentansprüche

1) Verfahren zur Herstellung von Hohlkörpern aus Kunststoff, vorzugsweise aus Elastomeren, wobei der gießfähige Kunststoff in eine die Außenkonturen des Hohlkörpers bildende Gießform mit einem Formkern eingebracht wird und der dort bis zur Gestaltfestigkeit bleibt, dadurch gekennzeichnet, daß zunächst ein als Formkern dienender elastischer Balg mit rieselfähigen Partikeln gefüllt, geformt und in der Gießform fixiert wird und bei der Kernentformung die Partikel aus dem Balg entfernt werden und der Balg herausgezogen wird.

2) Verfahren nach Anspruch 1, dadurch gekennzeichnet, daß der Balg in einer separaten, die Außenkontur des Formkerns bildenden Form mit rieselfähigen Partikeln gefüllt, geformt und fixiert wird und dann in die Gießform mit der Außenkontur für den Hohlkörper eingelegt wird.

3) Verfahren nach Anspruch 1, dadurch gekennzeichnet, daß der entsprechend vorgeformte, üblicherweise verstärkte Balg in der Gießform mit der Außenkontur für den Hohlkörper gefüllt, geformt und fixiert wird.

4) Verfahren nach Ansprüchen 1 bis 3, dadurch gekennzeichnet, daß der mit rieselfähigen Partikeln gefüllte Balg durch Schleudern verfestigt wird.

Le A 18 979

- 8 -

5) Verfahren nach Ansprüchen 1 bis 3, dadurch gekennzeichnet, daß der mit rieselfähigen Partikeln gefüllte Balg durch Evakuieren verfestigt wird.

6) Verfahren nach Ansprüchen 1 bis 3, dadurch gekennzeichnet, daß der Balg vor dem Füllen mit rieselfähigen Partikeln mit Druck beaufschlagt wird und nach dem Einfüllen der rieselfähigen Partikel durch Entspannen des Druckes und gegebenenfalls zusätzliches Evakuieren verfestigt wird.

7) Verfahren nach Ansprüchen 1 bis 6, dadurch gekennzeichnet, daß in dem Raum zwischen dem Kern und der die Außenkontur des Hohlkörpers bildenden Form Verstärkungseinlagen eingebaut werden.

8) Verfahren nach Ansprüchen 1 bis 7, dadurch gekennzeichnet, daß als rieselfähige Partikel vorzugsweise Kugeln aus Blähglas oder Blähton oder geschäumte Kugeln aus Kunststoff oder Gemische davon mit einem Durchmesser von 0,1 bis 20 mm, besonders bevorzugt zwischen 3 und 8 mm, eingefüllt werden.

9) Herstellung von Luftreifen nach dem Verfahren nach Ansprüchen 1 bis 8.

Le A 18 979

FIG. 1

FIG. 2

FIG. 3

FIG. 4

Europäisches
Patentamt

EUROPÄISCHER RECHERCHENBERICHT

0008012
Nummer der Anmeldung

EP 79 102 424.3

| Kategorie | EINSCHLÄGIGE DOKUMENTE | | KLASSIFIKATION DER ANMELDUNG (Int.Cl.3) |
|---|---|---|---|
| | Kennzeichnung des Dokuments mit Angabe, soweit erforderlich, der maßgeblichen Teile | betrifft Anspruch | |
| | DE – A – 1 604 528 (FARBENFABRIKEN BAYER) <br> * Seite 4, Zeile 4 bis Seite 5, Zeile 6; Fig. * <br> -- | 2 | B 29 C 1/12 <br> B 29 H 17/02 |
| | DE – B – 1 479 104 (DUNLOP) <br> * Anspruch 7; Fig. * <br> -- | 7 | |
| A | DE – A – 2 231 780 (FIRESTONE TIRE) <br> * Seite 2, Zeile 31 bis Seite 4, Zeile 23; Fig. 1 * <br> & US – A – 3 751 551 <br> -- | | **RECHERCHIERTE SACHGEBIETE (Int. Cl.3)** <br> B 29 C 1/00 <br> B 29 C 5/04 <br> B 29 H 17/02 |
| A | DE– A – 2 156 055 (PHOENIX GUMMI-WERKE) <br> * Anspruch 1, Fig. * <br> -- | | |
| A | GB – A – 1 282 306 (I.C.I.) <br> * Anspruch 1, Fig. * <br> ---- | | |

**KATEGORIE DER GENANNTEN DOKUMENTE**

X: von besonderer Bedeutung

A: technologischer Hintergruhd

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 13-11-1979 | BRUCK |

EPA form 1503.1 06.78